# EUROPEAN PATENT APPLICATION

(11) **EP 4 303 960 A1**
(43) Date of publication of application: **10.01.2024**
(21) Application number: 22929209.9
(22) Date of filing: 27.05.2022
(51) Int. Cl.: H01M 4/36, H01M 4/485, H01M 4/525

(54) **POSITIVE ELECTRODE ACTIVE MATERIAL AND PREPARATION METHOD THEREFOR, SECONDARY BATTERY, BATTERY MODULE, BATTERY PACK, AND ELECTRICAL DEVICE**

(71) Applicant: Contemporary Amperex Technology Co., Limited, Ningde City, Fujian 352100 (CN)
(72) Inventor: CHEN, Qiang, Ningde, Fujian 352100 (CN); WU, Qi, Ningde, Fujian 352100 (CN); NI, Huan, Ningde, Fujian 352100 (CN); SHEN, Chongheng, Ningde, Fujian 352100 (CN); HUAN, Shuxing, Ningde, Fujian 352100 (CN); ZHAO, Dong, Ningde, Fujian 352100 (CN); FAN, Jingpeng, Ningde, Fujian 352100 (CN); WANG, Jing, Ningde, Fujian 352100 (CN); LIU, Na, Ningde, Fujian 352100 (CN)
(74) Representative: Gong, Jinping
(86) International application number: PCT/CN2022/095482
(87) International publication number: WO 2023/225985

(57) **Abstract**

The present application provides a positive electrode active material and a preparation method thereof. The positive electrode active material includes a first positive electrode active material A and a second positive electrode active material B, wherein the first positive electrode active material A is a polycrystalline material having a chemical formula (I) of Li_{1.05-a1}Mₐ₁(Ni_{b1}Co_{c1}Mn_{d1})₁₋ₑ₁Qₑ₁O_{2-f1}H_{f1}, the second positive electrode active material B is a monocrystalline material having a chemical formula (II) of Li_{1.05-a2}Mₐ₂(Ni_{b2}Co_{c2}Mn_{d2})₁₋ₑ₂Qe₂O_{2-f2}H_{f2}, and the particle dispersity S of the positive electrode active material and the compaction density PD of the positive electrode active material under the pressure 5T satisfy: 5.5 ≤ S × PD ≤ 10. The positive electrode active material of the present application has high compaction density, improved structural stability, high filling degree among particles, good dispersibility, and good material processing performance, which can effectively improve the energy density of a battery, and improve the cycling performance and safety performance of the battery. The present application further provides a secondary battery, a battery module, a battery pack, and an electrical device including the positive electrode active material.

## Description

### Technical Field

The present application relates to the technical field of lithium-ion batteries, and in particular to a positive electrode active material and a preparation method thereof, as well as a secondary battery, a battery module, a battery pack and an electrical device including the positive electrode active material.

### Background

In recent years, as the application range of lithium-ion batteries is becoming more and more wide, the lithium-ion batteries have been widely applied in hydropower, firepower, wind power and solar power stations, and the like energy storage power supply systems, as well as in many fields of electric tools, electric bicycles, electric motorcycles, electric vehicles, military equipment, aerospace and the like. Due to the great development of the batteries, higher requirements have also been put forward for their energy density, cycling performances and safety performances, etc.

A positive electrode material is an important part of a lithium-ion battery. Currently, common positive electrode materials include layered structure materials (e.g. lithium cobalt oxide, lithium manganate, lithium nickelate, etc.), spinel structure materials, polyanion-based materials and ternary materials etc. A high-nickel ternary material has received more and more attention because of its higher energy density, lower cost and more reliable safety. Although the energy density of the high-nickel ternary material has been significantly improved compared with those of other materials, with the increase of nickel content, there will be serious problems such as capacity fading and damage of the layered structure during charge and discharge, which to a certain extent hinders the further development of the high-nickel ternary material. Therefore, it is necessary to adopt certain strategies to optimize the high-nickel ternary material, so as to increase the energy density of the battery, and improve the cycling performance and safety performance of the battery.

### Summary of the Invention

The present application is carried out in view of the aforementioned problems, and an objective of it is to provide a positive electrode active material which has high compaction density, improved structural stability, continuously distributed particles and good dispersibility; and to provide a preparation method of the positive electrode active material, as well as a secondary battery, a battery module, a battery pack and an electrical device including the positive electrode active material of the present application.

In order to achieve the aforementioned objective, a first aspect of the present application provides a positive electrode active material including: a first positive electrode active material A and a second positive electrode active material B, wherein,
the first positive electrode active material A is a polycrystalline material, and has a chemical formula of (I): Li_{1.05-a1}Mₐ₁(Ni_{b1}Co_{c1}Mn_{d1})₁₋ₑ₁Qₑ₁O_{2-f1}H_{f1}, wherein in the formula (I), 0.01 ≤ a1 ≤ 0.1, 0.7 ≤ b1 ≤ 0.96, 0.03 ≤ c1 ≤ 0.2, 0.01 ≤ d1 ≤ 0.2, 0 < e1 ≤ 0.05, 0 ≤ f1 ≤ 0.1, M is one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the second positive electrode active material B is a monocrystalline material, and has a chemical formula of (II): Li_{1.05-a2}Mₐ₂(Ni_{b2}Co_{c2}Mn_{d2})₁₋ₑ₂Qₑ₂O_{2-f2}H_{f2}, wherein in the formula (II), 0.01 ≤ a2 ≤ 0.1, 0.7 ≤ b2≤ 0.96, 0.03 ≤ c2 ≤ 0.2, 0.01 ≤ d2 ≤ 0.2, 0 < e2 ≤ 0.05, 0 ≤ f2 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the particle dispersity S of the positive electrode active material and the compaction density PD of the positive electrode active material under a pressure of 5T satisfy: 5.5 ≤ S × PD ≤ 10.

Therefore, compared with the prior art, the present application at least includes the following beneficial effects: 1) the positive electrode active material of the present application has high compaction density, high filling degree among particles, good dispersibility, and good material processing performance, which can effectively improve the energy density of the battery; 2) the positive electrode active material of the present application can widen a lithium ion channel by doping with an M (i.e. alkali metal) element, thereby improving the discharge capacity of the material; 3) the positive electrode active material of the present application can improve the structural stability of the material by doping with a Q element, thereby improving the cycling performance and safety performance of the battery; and 4) the positive electrode active material of the present application can improve the structural stability of the material and reduce oxygen release by doping with an H element, thereby improving the safety performance of a battery.

In any of embodiments, the positive electrode active material satisfies: 6.4 ≤ S × PD ≤ 8.0. When a product of the particle dispersity S of the positive electrode active material and the compaction density PD of the positive electrode active material under the pressure 5T is within this range, the positive electrode active material has high compaction density and a high filling degree among particles, so that the battery including the positive electrode active material has high energy density and improved cycling performance and safety performance.

In any of embodiments, the positive electrode active material has particle dispersity S of 1.5-2.5, and optionally 1.75-2.0. When the particle dispersity S of the positive electrode active material satisfies the aforementioned range, the positive electrode active material has continuously distributed particles and has good dispersibility, which is conducive to improving the processing performance of the positive electrode active material.

In any of embodiments, the compaction density PD of the positive electrode active material under the pressure 5T is 3.4-4.0 g/cm³, and optionally 3.7-3.9 g/cm³. The positive electrode active material has high compaction density and a high filling degree among particles, which not only is conducive to improving the processing performance of the positive electrode active material, but also can effectively improve the energy density of the battery.

In any of embodiments, a mass ratio of the first positive electrode active material A to the second positive electrode active material B is 9:1-1:1, and optionally 8:2-6:4. When among the positive electrode active materials, the mass ratio of the first positive electrode active material A to the second positive electrode active material B is within the aforementioned range, the positive electrode active material has high compaction density, improved structural stability, and high filling degree among particles, so that a secondary battery prepared from the positive electrode active material has high energy density and improved cycling performance and safety performance.

In any of embodiments, the first positive electrode active material A has a Dv50 of 6-20 µm, and optionally 8-15 µm. When the Dv50 of the first positive electrode active material A is within the aforementioned range, the compaction density of the positive electrode active material is enabled to be optimized, so that the battery can obtain high energy density.

In any of embodiments, the second positive electrode active material B has a Dv50 of 2-5 µm, and optionally 2.5-4 µm. When the Dv50 of the first positive electrode active material B is within the aforementioned range, the compaction density of the positive electrode active material is enabled to be optimized, so that the battery can obtain high energy density.

In any of embodiments, the positive electrode active material has a specific surface area of 0.2-1.2 m²/g, and optionally 0.4-0.7 m²/g. When the specific surface area of the positive electrode active material is within the aforementioned range, it can effectively reduce the corrosion of an electrolyte solution and reduce gas production, thereby improving the cycling performance of the battery and improving the safety performance of the battery.

A second aspect of the present application provides a method for preparing a positive electrode active material, including:
S1) preparation of a first positive electrode active material A: mixing a lithium salt, a precursor of the first positive electrode active material A, a compound containing an M element, a compound containing a Q element and a compound containing an H element according to a molar ratio, and sintering;
S2) preparation of a second positive electrode active material B: mixing a lithium salt, a precursor of the second positive electrode active material B, a compound containing an M element, a compound containing a Q element and a compound containing an H element according to a molar ratio, and sintering; and
S3) mixing the first positive electrode active material A with the second positive electrode active material B to make the positive electrode active material;
wherein, the first positive electrode active material A is a polycrystalline material, and has a chemical formula of (I): Li_{1.05-a1}Mₐ₁(Ni_{b1}Co_{c1}Mn_{d1})₁₋ₑ₁Qₑ₁O_{2-f1}H_{f1}, wherein in the formula (I), 0.01 ≤ a1 ≤ 0.1, 0.7 ≤ b1 ≤ 0.96, 0.03 ≤ c1 ≤ 0.2, 0.01 ≤ d1 ≤ 0.2, 0 < e1 ≤ 0.05, 0 ≤ f1 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the second positive electrode active material B is a monocrystalline material, and has a chemical formula of (II): Li_{1.05-a2}Mₐ₂(Ni_{b2}Co_{c2}Mn_{d2})₁₋ₑ₂Qₑ₂O_{2-f2}H_{f2}, wherein in the formula (II), 0.01 ≤ a2 ≤ 0.1, 0.7 ≤ b2≤ 0.96, 0.03 ≤ c2 ≤ 0.2, 0.01 ≤ d2 ≤ 0.2, 0 < e2 ≤ 0.05, 0 ≤ f2 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the particle dispersity S of the positive electrode active material and the compaction density PD of the positive electrode active material under a pressure of 5T satisfy: 5.5 ≤ S × PD ≤ 10.

Thus, the positive electrode active material prepared by the aforementioned method has high compaction density, improved structural stability, high filling degree among particles, good dispersibility, and good material processing performance, and the secondary battery prepared from the positive electrode active material has high energy density, improved cycling performance and safety performance.

In any of embodiments, the precursor of the first positive electrode active material A has a Dv50of 6-20 µm, and optionally 8-15 µm; and the precursor of the second positive electrode active material B has a Dv50 of 2-5 µm, and optionally 2.5-4 µm.

In any of embodiments, the compound containing the M element is one or more of a carbonate, oxide or sulfate containing the M element, and the M element is one of Na, K, Rb or Cs; the compound containing the Q element is one or more of an oxide, hydroxide or carbonate containing the Q element, and the Q element is one of Al, Mg, Zr, Ti, W, Y, B, Co, Nb, Mo, Sb or Sr; and the compound containing the H element is one or more of a metal compound and non-metal compound containing the H element, and the H element is one of F, Cl, Br or I.

In any of embodiments, in the step S1), a temperature of the sintering is 500-800°C, and a time of the sintering is 5-20 h.

In any of embodiments, in the step S2), the a temperature of the sintering is 600-900°C; and a time of the sintering is 5-20 h.

In any of embodiments, in the step S3), the first positive electrode active material A and the second positive electrode active material B are mixed at a mass ratio of 9:1-1:1, and optionally 4:1-3:2.

A third aspect of the present application provides a secondary battery including the positive electrode active material of the first aspect of the present application or a positive electrode active material prepared by the preparation method of the second aspect of the present application.

A fourth aspect of the present application provides a battery module including the secondary battery of the third aspect of the present application.

A fifth aspect of the present application provides a battery pack including the battery module of the fourth aspect of the present application.

A sixth aspect of the present application provides an electrical device including at least one selected from the secondary battery of the third aspect of the present application, the battery module of the fourth aspect of the present application, or the battery pack of the fifth aspect of the present application.

The battery module, battery pack, and electrical device of the present application includes the secondary battery provided by the present application, and thus have at least the same advantages as those of the secondary battery.

### Description of Drawings

Fig. 1 is a scanning electron micrograph of a positive electrode active material of Example 1 of the present application.
Fig. 2 is a scanning electron micrograph of a section of a sheet made of the positive electrode active material of Example 1 of the present application.
Fig. 3 is a schematic diagram of a secondary battery according to an embodiment of the present application.
Fig. 4 is an exploded view of the secondary battery according to an embodiment of the present application shown in Fig. 3.
Fig. 5 is a schematic diagram of a battery module according to an embodiment of the present application.
Fig. 6 is a schematic diagram of a battery pack according to an embodiment of the present application.
Fig. 7 is an exploded view of the battery pack according to an embodiment of the present application shown in Fig. 6.
Fig. 8 is a schematic view of an electrical device in which a secondary battery is used a power source according to an embodiment of the present application.

### Description of reference numerals:

1 battery pack; 2 upper box; 3 lower box; 4 battery module; 5 secondary battery; 51 case; 52 electrode assembly; 53 top cover assembly

### Detailed Description

Hereinafter, the embodiments of the positive electrode active material and the preparation method thereof, the secondary battery, the battery module, the battery pack and the electrical device of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary verbosity in the following description and facilitate the understanding of those skilled in the art. In addition, the drawings and subsequent descriptions are provided for those skilled in the art to fully understand the present application, and are not intended to limit the subject matter recited in the claims.

A "range" disclosed in the present application is defined in the form of a lower limit and an upper limit, with a given range being defined by the selection of a lower limit and an upper limit, and the selected lower and upper limits defining the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. Additionally, when it is stated that a certain parameter is an integer of ≥ 2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

If not specifically stated, "including" and "comprising" mentioned in the present application indicate open inclusion or closed inclusion. For example, the "including" and "comprising" may indicate that it may further include or comprise other components not listed, and it may include or comprise only the listed components.

Unless otherwise specified, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

A high-nickel ternary positive electrode material has an α-NaFeO₂-type layered structure, belongs to a R-3m space group, and is a solid solution oxide obtained by substituting partial Ni elements in LiNiO₂ with a metal element such as Co and Mn. The high-nickel ternary positive electrode material combines the synergistic effects of the three elements Ni-Co-Mn, wherein the Ni element can effectively increase the specific capacity of the material and increase the energy density of the material; the Co element has excellent electrochemical activity, makes the mixed arranging of the Li⁺ with the Ni²⁺ cations of the material be reduced, and meanwhile, improves the electronic conductivity of the material and improves the cycling performance of the material; and the Mn element can reduce the material cost, improve the safety and stability of the battery, and stabilize the crystal structure of the material. Although important progress has been made in the research on the high-nickel ternary positive electrode material in recent years, there are still many problems to be solved urgently: 1) the mixed arranging of Ni²⁺ with Li⁺ will occur when the high-nickel ternary material is cycled, and Ni²⁺ will occupy the site of the Li⁺ and thus make it impossible for the Li⁺ to intercalate into a lithium layer when the material is discharged, resulting in capacity loss and rate performance reduction of the material; 2)Ni⁴⁺ is easy to generate Ni³⁺ due to its reducibility, and in order to maintain charge balance, oxygen will be released from the material, leading to structural destruction and reduction of thermal stability of the material; and 3) since the diffusion of Li⁺ is affected by kinetic factors, the deintercalated amount of Li increases and thus the transition metal ions are reduced, new phases and pores are formed on the surface of the material to maintain its electrical neutrality, which leads to structural instability of the high-nickel material, accelerates the structural instability under overcharge conditions, and allows a certain hidden danger in the safety of the battery since it is accompanied by partial structural transformation towards spinel-type and NiO-type rock-salt phases and oxygen generation. Currently, the electrochemical performance of the material is usually improved by means of surface cladding, ion doping, etc. However, it is still hoped that the discharge capacity, cycling performance, high-temperature stability and the like of the high-nickel ternary positive electrode material can be further improved.

In view of the aforementioned problem, a first aspect of the present application provides a positive electrode active material including: a first positive electrode active material A and a second positive electrode active material B, wherein,
the first positive electrode active material A is a polycrystalline material, and has a chemical formula of (I): Li_{1.05-a1}Mₐ₁(Ni_{b1}Co_{c1}Mn_{d1})₁₋ₑ₁Qₑ₁O_{2-f1}H_{f1}, wherein in the formula (I), 0.01 ≤ a1 ≤ 0.1, 0.7 ≤ b 1 ≤ 0.96, 0.03 ≤ c1 ≤ 0.2, 0.01 ≤ d1 ≤ 0.2, 0 < e1 ≤ 0.05, 0 ≤ f1 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the second positive electrode active material B is a monocrystalline material, and has a chemical formula of (II): Li_{1.05-a2}Mₐ₂(Ni_{b2}Co_{c2}Mn_{d2})₁₋ₑ₂Qₑ₂O_{2-f2}H_{f2}, wherein in the formula (II), 0.01 ≤ a2 ≤ 0.1, 0.7 ≤ b2 ≤ 0.96, 0.03 ≤ c2 ≤ 0.2, 0.01 ≤ d2 ≤ 0.2, 0 < e2 ≤ 0.05, 0 ≤ f2 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the particle dispersity S of the positive electrode active material and the compaction density PD of the positive electrode active material under a pressure of 5T satisfy: 5.5 ≤ S × PD ≤ 10.

Although the mechanism is not yet clear, the applicant has unexpectedly found that the positive electrode active material of the present application has high compaction density, improved structural stability, a high filling degree among particles, good dispersibility, and good material processing performance, which can effectively improve the energy density of the battery. Moreover, the positive electrode active material of the present application 1) widens the lithium ion channel by doping with the M (i.e. alkali metal) element, which is beneficial to the intercalation and deintercalation of lithium ions, improves the transmission rate of lithium ions, and thus improves the discharge capacity of the material; 2) improves the structural stability of the material by doping with the Q element, which can effectively inhibit an interface side reaction between the positive electrode active material and the electrolyte solution, and reduce gas production, thereby improving the cycling performance and safety performance of the battery; and 3) effectively improves the structural stability of the material and reduces oxygen release by doping with the H element, thereby improving the safety performance of the battery.

In the present application, the PD is the compaction density of the ternary positive electrode active material under a pressure of 5T as measured according to GB/T 24533-2009, and the S is the particle dispersibility of the positive electrode active material calculated from a particle diameter measured by volume particle size distribution according to the formula S = (Dv90 - Dv10)/Dv50, wherein the Dv10 is the corresponding particle size when the volume cumulative percentage of the sample reaches 10%, the Dv50is the corresponding particle size when the volume cumulative percentage of the sample reaches 50%, and the Dv90 is the corresponding particle size when the volume cumulative percentage of the sample reaches 90%.

In the present application, the polycrystalline refers to a secondary particle, which is a state in which multiple primary particles are aggregated to form a spherical particle; and the monocrystalline refers to a state in which the primary particles are individual particles with a size greater than 1 µm, and have no obvious agglomeration.

Unless otherwise specified, in the aforementioned chemical formula, for example the chemical formula I, when M is two or more elements, the definition for the numerical range of a1 is not only a definition for the stoichiometric number of each element as M, but also a definition for the sum of the stoichiometric numbers of various elements as M. That is, when M is two or more elements M1, M2...Mn, the respective stoichiometric numbers a11, a12...a1n of M1, M2...Mn each need to fall within the numerical range defined by the present application for a1, and the sum of a11, a12...a1n also needs to fall within this numerical range; and for the case where Q and H are two or more elements, the definition of the numerical range of the stoichiometric numbers of Q and H by the present application also has the aforementioned meaning. Similarly, the definition of the numerical range of the stoichiometric numbers of M, Q and H in the chemical formula II also has the aforementioned meaning.

In some embodiments, the positive electrode active material satisfies: 6.4 ≤ S × PD ≤ 8.0. When a product of the particle dispersity S of the positive electrode active material and the compaction density PD of the positive electrode active material under the pressure 5T is within this range, the positive electrode active material has further improved compaction density, a high filling degree among particles, and good structural stability, so that the energy density, cycling performance and safety performance of the battery including the positive electrode active material are further improved.

In some embodiments, the positive electrode active material has particle dispersity S of 1.5-2.5, and optionally 1.75-2.0. When the particle dispersity S of the positive electrode active material satisfies the aforementioned range, the positive electrode active material has continuously distributed particles and has good dispersibility, which is conducive to further improving the processing performance of the positive electrode active material.

In some embodiments, the compaction density PD of the positive electrode active material under the pressure 5T is 3.4-4.0 g/cm³, and optionally 3.7-3.9 g/cm³. The higher the compaction density is, the greater the weight of the active material per unit volume will be. Therefore, increasing the compaction density is beneficial to the improvement of the volumetric energy density of a battery cell. The positive electrode active material has high compaction density and a high filling degree among particles, which not only is conducive to further improving the processing performance of the positive electrode active material, but also can further improve the energy density of the battery. The compaction density can be measured according to GB/T 24533-2009.

In some embodiments, a mass ratio of the first positive electrode active material A to the second positive electrode active material B is 9:1-1:1, and optionally 8:2-6:4. When among the positive electrode active materials, the mass ratio of the first positive electrode active material A to the second positive electrode active material B is within the aforementioned range, the positive electrode active material has high compaction density, improved structural stability, and high filling degree among particles, so that a secondary battery prepared from the positive electrode active material has high energy density and improved cycling performance and/or safety performance.

In some embodiments, the first positive electrode active material A has a Dv50 of 6-20 µm, and optionally 8-15 µm. When the particle size of the first positive electrode active material A is within the aforementioned range, the compaction density of the positive electrode active material is enabled to be optimized, so that the energy density of the battery is further improved.

In some embodiments, the first positive electrode active material A has a Dv10 of 2-7 µm, and a Dv90 of 14-28 µm. When the particle size of the first positive electrode active material A is within the aforementioned range, the compaction density of the positive electrode active material is enabled to be optimized, so that the energy density of the battery is further improved.

In some embodiments, the second positive electrode active material B has a Dv50 of 2-5 µm, and optionally 2.5-4 µm. When the particle size of the first positive electrode active material B is within the aforementioned range, the compaction density of the positive electrode active material is enabled to be optimized, so that the energy density of the battery is further improved.

In some embodiments, the second positive electrode active material B has a Dv10 of 1-3 µm, and a Dv90 of 5-9 µm. When the particle size of the first positive electrode active material B is within the aforementioned range, the compaction density of the positive electrode active material is enabled to be optimized, so that the energy density of the battery is further improved.

In some embodiments, the positive electrode active material has a specific surface area of 0.2-1.2 m²/g, and optionally 0.4-0.7 m²/g. When the specific surface area of the positive electrode active material is within the aforementioned range, it can effectively reduce the corrosion of the electrolyte solution and reduce side reactions, thereby reducing gas production and further improving the storage performance and cycling performance of the battery.

A second aspect of the present application provides a method for preparing a positive electrode active material, including:
S1) preparation of a first positive electrode active material A: mixing a lithium salt, a precursor of the first positive electrode active material A, a compound containing an M element, a compound containing a Q element and a compound containing an H element according to a molar ratio, and sintering;
S2) preparation of a second positive electrode active material B: mixing a lithium salt, a precursor of the second positive electrode active material B, a compound containing an M element, a compound containing a Q element and a compound containing an H element according to a molar ratio, and sintering; and
S3) mixing the first positive electrode active material A with the second positive electrode active material B to make the positive electrode active material;
wherein, the first positive electrode active material A is a polycrystalline material, and has a chemical formula of (I): Li_{1.05-a1}Mₐ₁(Ni_{b1}Co_{c1}Mn_{d1})₁₋ₑ₁Qₑ₁O_{2-f1}H_{f1}, wherein in the formula (I), 0.01 ≤ a1 ≤ 0.1, 0.7 ≤ b 1 ≤ 0.96, 0.03 ≤ c1 ≤ 0.2, 0.01 ≤ d1 ≤ 0.2, 0 < e1 ≤ 0.05, 0 ≤ f1 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the second positive electrode active material B is a monocrystalline material, and has a chemical formula of (II): Li_{1.05-a2}Mₐ₂(Ni_{b2}Co_{c2}Mn_{d2})₁₋ₑ₂Qₑ₂O_{2-f2}H_{f2}, wherein in the formula (II), 0.01 ≤ a2 ≤ 0.1, 0.7 ≤ b2 ≤ 0.96, 0.03 ≤ c2 ≤ 0.2, 0.01 ≤ d2 ≤ 0.2, 0 < e2 ≤ 0.05, 0 ≤ f2 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the particle dispersity S of the positive electrode active material and the compaction density PD of the positive electrode active material under a pressure of 5T satisfy: 5.5 ≤ S × PD ≤ 10.

The positive electrode active material prepared by the aforementioned method has high compaction density, improved structural stability, high filling degree among particles, good dispersibility, and good material processing performance, and the secondary battery prepared from the positive electrode active material has high energy density, improved cycling performance and safety performance.

In the present application, the precursor of the first positive electrode active material A and the precursor of the second positive electrode active material B can be prepared by methods known in the prior art such as a hydroxide co-precipitation method, for example prepared by a method described in CN 111384372 A. More specifically, the precursor of the first positive electrode active material A may include but not limited to Ni_{0.8}Co_{0.1}Mn_{0.1}(OH)₂, Ni_{0.9}Co_{0.05}Mn_{0.05}(OH)₂, Ni_{0.7}Co_{0.1}Mn_{0.2}(OH)₂, Ni_{0.96}Co_{0.03}Mn_{0.01}(OH)₂, Ni_{0.75}Co_{0.1}Mn_{0.15}(OH)₂. The precursor of the second positive electrode active material B may include but not limited to Ni_{0.8}Co_{0.1}Mn_{0.1}(OH)₂, Ni_{0.9}Co_{0.05}Mn_{0.05}(OH)₂, Ni_{0.7}Co_{0.1}Mn_{0.2}(OH)₂, Ni_{0.96}Co_{0.03}Mn_{0.01}(OH)₂, Ni_{0.75}Co_{0.1}Mn_{0.15}(OH)₂.

In some embodiments, the precursor of the first positive electrode active material A has a Dv10 of 2-7 µm, a Dv90 of 14-28 µm, and a Dv50 of 6-20 µm and optionally 8-15 µm; and the precursor of the second positive electrode active material B has a Dv10 of 1-3 µm, a Dv90 of 5-9 µm, and a Dv50 of 2-5 µm and optionally 2.5-4 µm. By adjusting the particle size distribution of the precursors A and B of the positive electrode active materials, the positive electrode active material with the desired particle size distribution can be obtained, so that the obtained positive electrode active material has a high filling degree among particles, good dispersibility, high compaction density and good material processing performance.

In some embodiments, the compound containing the M element is one or more of a carbonate, oxide or sulfate containing the M element, and the M element is one of Na, K, Rb or Cs; the compound containing the Q element is one or more of an oxide, hydroxide or carbonate containing the Q element, and the Q element is one of Al, Mg, Zr, Ti, W, Y, B, Co, Nb, Mo, Sb or Sr; and the compound containing the H element is one or more of a metal compound and non-metal compound containing the H element, and the H element is one of F, Cl, Br or I. By selecting the sources of the M, Q and H elements, the distribution uniformity of the doped elements can be improved, thereby improving the performance of the material.

In some embodiments, in the step S1), a temperature of the sintering is 500-800°C, and a time of the sintering is 5-20 h. In some embodiments, sintering can be conducted, for example, under an oxygen atmosphere. By controlling the sintering temperature and sintering time, the M, Q and H elements can be uniformly distributed, and the crystallinity of the material after sintering is higher, which thus can improve the gram capacity and rate performance of the material.

In some embodiments, in the step S2), a temperature of the sintering is 600-900°C, and a time of the sintering is 5-20 h. In some embodiments, sintering can be conducted, for example, under an oxygen atmosphere. By controlling the sintering temperature and sintering time, the M, Q and H elements can be uniformly distributed, and the crystallinity of the material after sintering is higher, which thus can improve the gram capacity and rate performance of the material.

In some embodiments, in the step S3), the first positive electrode active material A and the second positive electrode active material B are mixed at a mass ratio of 9:1-1:1, and optionally 4:1-3:2. By controlling the mass ratio of the first positive electrode active material A to the second positive electrode active material B, the obtained positive electrode active material can have high compaction density and a high filling degree among particles, so that a secondary battery prepared from the positive electrode active material has high energy density and improved cycling performance and safety performance.

In some embodiments, the first positive electrode active material A may be, for example, Li_{1.03}Na_{0.02}(Ni_{0.96}Co_{0.03}Mn_{0.01})_{0.99}Al_{0.01}O₂, Li_{1.03}Na_{0.02}(Ni_{0.9}Co_{0.05}Mn_{0.05})_{0.99}Al_{0.01}O₂, Li_{1.04}Na_{0.01}(Ni_{0.9}Co_{0.05}Mn_{0.05})_{0.95}Sb_{0.05}O₂, Li_{1.03}Na_{0.02}(Ni_{0.9}Co_{0.05}Mn_{0.05})_{0.99}Nb_{0.01}O₂, Li_{1.03}K_{0.02}(Ni_{0.9}Co_{0.05}Mn_{0.05})_{0.99}Ti_{0.01}O₂, Li_{1.03}K_{0.02}(Ni_{0.9}Co_{0.05}Mn_{0.05})_{0.99}Mo_{0.01}O₂, Li_{1.03}Na0_{.02}(Ni_{0.9}Co_{0.05}Mn_{0.05})_{0.99}Al_{0.01}O_{1.97}F_{0.03}.

The second positive electrode active material B may be, for example, Li_{1.03}Na_{0.02}(Ni_{0.7}Co_{0.1}Mn_{0.2})_{0.99}Al_{0.01}O₂, Li_{1.03}Na_{0.02}(Ni_{0.9}Co_{0.05}Mn_{0.05})_{0.99}Al_{0.01}O₂, Li_{1.04}Na_{0.01}(Ni_{0.9}Co_{0.05}Mn_{0.05})_{0.95}Sb_{0.05}O₂, Li_{1.03}Na_{0.02}(Ni_{0.9}Co_{0.05}Mn_{0.05})_{0.99}Nb_{0.01}O₂, Li_{1.03}K_{0.02}(Ni_{0.9}Co_{0.05}Mn_{0.05})_{0.99}Ti_{0.01}O₂, Li_{1.03}K_{0.02}(Ni_{0.9}Co_{0.05}Mn_{0.05})_{0.99}Mo_{0.01}O₂, Li_{1.03}Na_{0.02}(Ni_{0.9}Co_{0.05}Mn_{0.05})_{0.99}Al_{0.01}O_{1.97}F_{0.03}.

In some embodiments, in the chemical formula (I): Li_{1.05-a1}Mₐ₁(Ni_{b1}Co_{c1}Mn_{d1})₁₋ₑ₁Qₑ₁O_{2-f1}H_{f1}, the ratio of a1 to e1 (i.e. a1/e1) is 1-4:1, and optionally 1.5-2.5:1.

In some embodiments, in the chemical formula (II): Li_{1.05-a2}Mₐ₂(Ni_{b2}Co_{c2}Mn_{d2})₁₋ₑ₂Qₑ₂O_{2-f2}H_{f2}, the ratio of a2 to e2 (i.e. a2/e2) is 1-4:1, and optionally 1.5-2.5:1.

In some embodiments, in the positive electrode active material, the ratio of a1 to a2 (i.e. a1/a2) is 1:1, the ratio of e1 to e2 (i.e. e1/e2) is 1:1, and the ratio of f1 to f2 (i.e. f1/f2) is 1:1.

Moreover, the secondary battery, battery module, battery pack and an electrical device of the present application will be described hereafter with appropriate reference to the accompanying drawings.

In an embodiment of the present application, a secondary battery is provided.

Generally, the secondary battery includes a positive electrode sheet, a negative electrode sheet, an electrolyte and a separator. During the charging and discharging process of the battery, active ions are embedded and detached back and forth between the positive electrode sheet and the negative electrode sheet. The electrolyte plays the role of conduct ions between the positive electrode sheet and the negative electrode sheet. The separator is arranged between the positive electrode sheet and the negative electrode sheet, which mainly plays a role in preventing the short circuit between the positive and negative electrodes, and meanwhile allowing the ions to pass through. In the present application, the battery group margin is 90-95%.

### [positive electrode sheet]

The positive electrode sheet includes a positive electrode current collector and a positive electrode film layer arranged on at least one surface of the positive electrode current collector, and the positive electrode film layer includes the positive electrode active material of the first aspect of the present application.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, an aluminum foil can be used as the metal foil. The composite current collector may include a polymer material substrate layer and a metal layer formed on at least one surface of the polymer material substrate layer. The composite current collector can be formed by forming a metal material (aluminum, aluminum alloy, nickel, nickel alloy, titanium, titanium alloy, silver and silver alloy, etc.) on the polymer material substrate layer (e.g., polypropylene (PP), polyethylene terephthalate (PET), polybutylene terephthalate (PBT), polystyrene (PS), polyethylene (PE), etc.).

In some embodiments, in addition to the positive electrode active material of the first aspect of the present application, a positive electrode active material for the battery well known in the art can also be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials useful as positive electrode active materials for batteries can also be used. These positive electrode active materials may be used alone or in combination of two or more thereof. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂, LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and modified compounds thereof. Examples of the lithium-containing phosphate with an olivine structure may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotubes, graphene, and carbon nanofibers.

In some embodiments, the positive electrode sheet can be prepared by: dispersing the aforementioned components for preparing the positive electrode sheet, for example, the positive electrode active material of the first aspect of the present application, a conductive agent, a binder and any other components in a solvent (e.g., N-methyl pyrrolidone) to form a positive electrode slurry; and coating the positive electrode slurry onto a positive electrode current collector, followed by oven drying, cold pressing and the like procedures, to obtain the positive electrode sheet.

### [negative electrode sheet]

The negative electrode sheet includes a negative electrode current collector and a negative electrode film layer arranged on at least one surface of the negative electrode current collector, wherein the negative electrode film layer includes a negative electrode active material.

As an example, the negative electrode current collector has two opposite surfaces in its own thickness direction, and the negative electrode film layer is arranged on either or both of the opposite surfaces of the negative electrode current collector.

In some embodiments, the negative current collector can be a metal foil or a composite current collector. For example, a copper foil can be used as the metal foil. The composite current collector may include a polymer material substrate layer and a metal layer formed on at least one surface of the polymer material substrate layer. The composite current collector can be formed by forming a metal material (copper, copper alloy, nickel, nickel alloy, titanium, titanium alloy, silver and silver alloy, etc.) on the polymer material substrate layer (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art can be used as the negative electrode active material. As an example, the negative electrode active material may include at least one of the following materials: artificial graphite, natural graphite, soft carbon, hard carbon, silicon-based materials, tin-based materials, lithium titanate, and the like. The silicon-based material can be at least one selected from elemental silicon, a silicon oxide compound, a silicon-carbon composite, a silicon-nitrogen composite, and a silicon alloy. The tin-based material may be at least one selected from elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof. The negative electrode active material may have an average particle size (D₁₀) of 1 µm-15 µm, and optionally 4 µm-9 µm; an average particle size (D₅₀) of 12 µm-22 µm, and optionally 14 µm-17 µm; and an average particle size (D₉₀) of 26 µm to 40 µm, and optionally 30 µm-37 µm. D₁₀ is a corresponding particle size when the volume cumulative distribution percentage of the sample reaches 10%; D₅₀ is a corresponding particle size when the volume cumulative distribution percentage of the sample reaches 50%; and D₉₀ is a corresponding particle size when the volume cumulative distribution percentage of the sample reaches 90%.

In some embodiments, the negative electrode film layer further optionally includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally include other adjuvants, for example, a thickener (e.g., sodium carboxymethylcellulose (CMC-Na)) and the like.

In some embodiments, the negative electrode sheet can be prepared by: dispersing the aforementioned components for preparing the negative electrode sheet, e.g., the negative electrode active material, the conductive agent, the binder and any other components in a solvent (e.g. deionized water) to form a negative electrode slurry; and coating the negative electrode slurry on a negative current collector, followed by oven drying, cold pressing and the like procedures, to obtain the negative electrode sheet.

### [electrolyte]

The electrolyte plays the role of conduct ions between the positive electrode sheet and the negative electrode sheet. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent can be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally includes an additive. For example, the additive may include a negative electrode film-forming additive, or a positive electrode film-forming additive, or may include an additive that capable of improving some performances of the battery, e.g., an additive for improving the overcharge performance of the battery, an additive for improving the high-temperature performance or low-temperature performance of the battery, and the like.

### [separator]

In some embodiments, the secondary battery further includes a separator. The present application has no particular limitation on the types of the separator, and any well-known separator of a porous structure with good chemical stability and mechanical stability can be selected for use.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite thin film, the material of each layer may be the same or different, and there is no particular limitation on it.

In some embodiments, the positive electrode sheet, the negative electrode sheet and the separator can be made into an electrode assembly by a winding process or a stacking process.

In some embodiments, the secondary battery may include an outer package. The outer package can be used for packaging the aforementioned electrode assembly and the electrolyte.

In some embodiments, the outer package of the secondary battery may be a hard housing, such as a hard plastic housing, an aluminum housing, a steel housing, etc. The outer package of the secondary battery may also be a soft package, such as a bag-type soft package. The material of the soft package can be plastic, and as the plastic, polypropylene, polybutylene terephthalate, polybutylene succinate and the like can be listed.

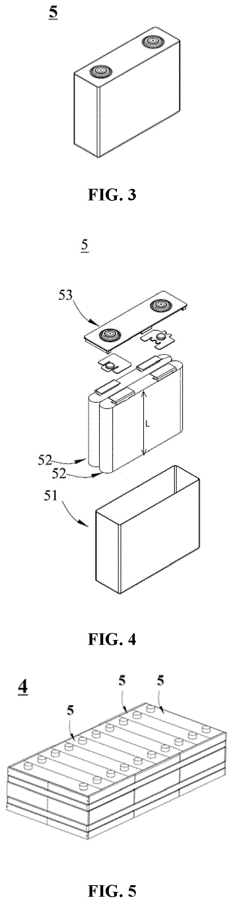

The present application has no particular limitation on the shape of the secondary battery, which can be cylindrical, square or any other shape. For example, Fig. 3 shows a secondary battery 5 with a square structure as an example.

In some embodiments, referring to Fig. 4, the outer package may include a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode sheet, the negative electrode sheet and the separator can be subjected to a winding or stacking process to form an electrode assembly 52. The electrode assembly 52 is encapsulated in the accommodating cavity. The electrolyte solution impregnates the electrode assembly 52. The number of the electrode assemblies 52 included in the secondary battery 5 can be one or more, which can be selected by those skilled in the art according to specific practical requirements.

In some embodiments, the secondary batteries can be assembled into a battery module, and the number of the secondary batteries included in the battery module can be one or more, and the specific number can be selected by those skilled in the art according to the application and capacity of the battery module.

Fig. 5 shows a battery module 4 as an example. Referring to Fig. 5, in the battery module 4, multiple secondary batteries 5 may be sequentially arranged along a length direction of the battery module 4. Of course, any other arrangement is also possible. The plurality of secondary batteries 5 may further be fixed by fasteners.

Optionally, the battery module 4 may further include a shell having an accommodating space in which the multiple secondary batteries 5 are accommodated.

In some embodiments, the aforementioned battery module may further be assembled into a battery pack, the number of battery modules contained in the battery pack may be one or more, and the specific number can be selected by those skilled in the art according to the use and capacity of the battery pack.

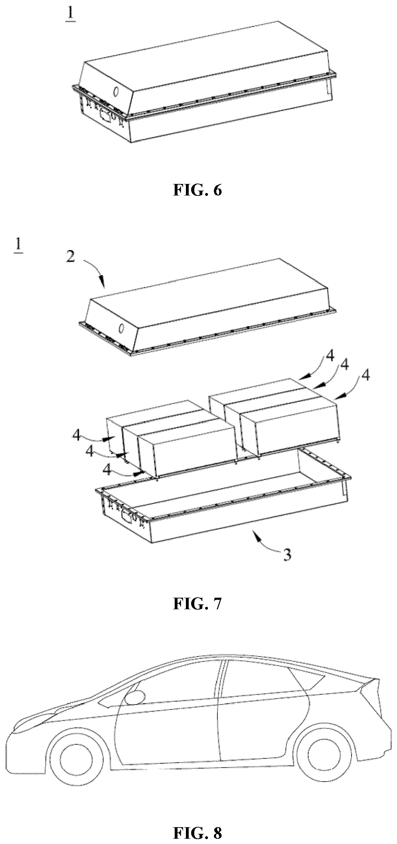

Figs. 6 and 7 show a battery pack 1 as an example. Referring to Figs. 6 and 7, the battery pack 1 may include a battery box and multiple battery modules 4 disposed in the battery box. The battery box includes an upper box 2 and a lower box 3, where the upper box 2 can cover the lower box 3 and forms an enclosed space for accommodating the battery module 4. The plurality of battery modules 4 may be arranged in the battery box in any manner.

Additionally, the present application further provides an electrical device including at least one of the secondary battery, the battery module, or the battery pack provided by the present application. The secondary battery, battery module, or battery pack can be used as a power source for the electrical device, and can also be used as an energy storage unit for the electrical device. The electrical device may include, but is not limited to, a mobile device (e.g. a mobile phone, and a laptop, etc.), an electric vehicle (e.g. an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

The secondary battery, the battery module, or the battery pack can be selected as the electrical device according to the use requirements of the electrical device.

Fig. 8 shows an electrical device as an example. The electrical device is an all-electric vehicle, a hybrid electric vehicle or a plug-in hybrid electric vehicle, and the like. In order to meet the requirements of the electrical device for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described hereinafter. The following examples are illustrative and only for explaining the present application, and should not be construed as limiting the present application. If no specific technology or condition is indicated in the examples, it shall be carried out according to the technology or condition described in the literature in the art or according to product instructions. All of the used agents or instruments which are not specified with the manufacturer are conventional commercially-available products.

### I. Preparation of primary battery and secondary battery

### Example 1

### 1. Preparation of positive electrode active material

### 1) Preparation of precursor of first positive electrode active material A

Nickel sulfate, cobalt sulfate, and manganese sulfate were formulated into a 2 mol/L metal salt solution in a molar ratio of 8:1:1. Then the metal salt solution, 8 mol/L ammonia water, and a 5 mol/L NaOH solution were continuously added into a reaction kettle for reaction. By controlling the pH value to be 11.30, the ammonia concentration to be 4.0 g/L, the reaction time to be 20 h, and the stirring rate to be 300 r/min in the reaction process, and utilizing a hydroxide co-precipitation method, a precursor of a first positive electrode active material A (Ni_{0.8}Co_{0.1}Mn_{0.1}(OH)₂) was prepared with a particle size Dv50 of 10 µm;

### 2) Preparation of precursor of second positive electrode active material B

Nickel sulfate, cobalt sulfate, and manganese sulfate were formulated into a 2 mol/L metal salt solution in a molar ratio of 8:1:1. Then the metal salt solution, 8 mol/L ammonia water, and a 5 mol/L NaOH solution were continuously added into a reaction kettle for reaction. By controlling the pH value to be 11.60, the ammonia concentration to be 3.0 g/L, the reaction time to be 20 h, and the stirring rate to be 400 r/min in the reaction process, and utilizing a hydroxide co-precipitation method, a precursor of a second positive electrode active material B (Ni_{0.8}Co_{0.1}Mn_{0.1}(OH)₂) was prepared with a particle size Dv50 of 4 µm (Ni_{0.8}Co_{0.1}Mn_{0.1}(OH)₂);

### 3) Preparation of first positive electrode active material A

Lithium hydroxide, sodium carbonate, the precursor of the first positive electrode active material A, and aluminum oxide were put in a colter blender in a molar ratio of 1.03 :0.02:0.99:0.01 and mixed uniformly, and then the mixed material was put into a kiln for sintering at a sintering temperature of 750°C for a sintering time of 15 h under a sintering atmosphere of oxygen. After cooling, the first positive electrode active material A (Li_{1.03}Na_{0.02}(Ni_{0.8}Co_{0.1}Mn_{0.1})_{0.99}Al_{0.01}O₂) with a particle size Dv50 of 10 µm was obtained by mechanical disruption;

### 4) Preparation of second positive electrode active material B

Lithium hydroxide, sodium carbonate, the precursor of the second positive electrode active material B, and aluminum oxide were put in a colter blender in a molar ratio of 1.03 :0.02:0.99:0.01 and mixed uniformly, and then the mixed material was put into a kiln for sintering at a sintering temperature of 800°C for a sintering time of 14 h under a sintering atmosphere of oxygen. After cooling, the second positive electrode active material B (Li_{1.03}Na_{0.02}(Ni_{0.8}Co_{0.1}Mn_{0.1})_{0.99}Al_{0.01}O₂) with a particle size Dv50 of 4 µm was obtained by air stream pulverization;
5) the aforementioned first positive electrode active material A and second positive electrode active material B were put into a mixer at a mass ratio of 8:2 and mixed for 1 h to obtain a positive electrode active material.

### 2. Preparation of button-type battery

[positive electrode sheet] the positive electrode active material obtained above, polyvinylidene fluoride (PVDF), and acetylene black were added into NMP in a weight ratio of 90:5:5, and stirred in a drying room to prepare a slurry. The slurry was coated onto an aluminum foil, dried and cold-pressed to form a positive electrode sheet. The coating amount was 0.01 g/cm²and the compaction density was 3.5 g/cm³.
[Negative pole piece] a 0.5 mm lithium metal sheet was used as the negative electrode sheet.
[electrolyte solution] ethylene carbonate (EC), ethyl methyl carbonate (EMC) and diethyl carbonate (DEC) were formulated into a solution in a volume ratio of 1:1:1, and then LiPF₆ was uniformly dissolved in the aforementioned solution to obtain the electrolyte solution, wherein the concentration of LiPF₆ was 1 mol/L.
[separator]

The separator was purchased from Cellgard, and had a model of cellgard 2400.

The positive electrode sheet, negative electrode sheet, separator and electrolyte solution prepared above were assembled into a CR2032-type button-type battery (hereinafter also referred to as "button-type battery") in a button-type battery box.

### 3. Preparation of total battery

[Positive electrode sheet] the positive electrode active material obtained above, acetylene black and polyvinylidene fluoride (PVDF) were mixed uniformly in a N-methyl pyrrolidone solvent system at a weight ratio of 94:3:3, and then coated onto an aluminum foil, oven-dried, and cold-pressed to obtain a positive electrode sheet. The coating amount was 0.02 g/cm² and the compaction density was 3.5 g/cm³.
[negative electrode sheet] the negative electrode active materials artificial graphite and hard carbon, the conductive agent acetylene black, the binder styrene butadiene rubber (SBR), the thickener sodium carboxymethyl cellulose (CMC-Na) were mixed uniformly in a mass ratio of 90:5:2:2: 1 in deionized water, and then coated onto a copper foil, oven-dried, and cold-pressed to obtain the negative electrode sheet. The coating amount was 0.015 g/cm² and the compaction density was 1.6 g/cm³.
[electrolyte solution] ethylene carbonate (EC), ethyl methyl carbonate (EMC) and diethyl carbonate (DEC) were formulated into a solution in a volume ratio of 1:1:1, and then LiPF₆ was uniformly dissolved in the aforementioned solution to obtain the electrolyte solution, wherein the concentration of LiPF₆ was 1 mol/L.
[separator] a PE porous polymer film was used as the separator.

The aforementioned positive electrode sheet, separator and negative electrode sheet were stacked in sequence, so that the separator was placed between the positive electrode sheet and the negative electrode sheet to play a role of isolation, and then they were wound to obtain a bare battery cell. The bare battery cell was placed in an outer package, injected with the electrolyte solution and encapsulated, so as to obtain a total battery (also referred to as "full battery" hereafter). The length × width × height of the total battery = 90 mm × 30 mm × 60 mm, and the battery group margin was 91.0%.

### Examples 2-5

The examples were same as Example 1, except that: the particle sizes Dv50 of the precursor of the first positive electrode active material A (Ni_{0.8}Co_{0.1}Mn_{0.1}(OH)₂) were 6 µm, 8 µm, 15 µm, and 20 µm, respectively, and the particle sizes Dv50 of the first positive electrode active material A obtained therefrom were 6 µm, 8 µm, 15 µm, and 20 µm, respectively.

### Examples 6-8

The examples were same as Example 1, except that: the particle sizes Dv50 of the precursor of the second positive electrode active material B (Ni_{0.8}Co_{0.1}Mn_{0.1}(OH)₂) were 2µm, 2.5 µm, and 5 µm, respectively, and the particle sizes Dv50 of the second positive electrode active material B obtained therefrom were 2 µm, 2.5 µm, and 5 µm, respectively.

### Examples 9-12

The examples were same as Example 1, except that: the mixing mass ratios of the first positive electrode active material A and the second positive electrode active material B were 5:5, 6:4, 7:3, and 9: 1, respectively.

### Examples 13-23

The examples were same as Example 1, except that: the first positive electrode active material A and the second positive electrode active material B had different compositions, which were particularly shown in Table 1.

### Comparative Example 1

The Comparative Example was same as Example 1, except that:
Nickel sulfate, cobalt sulfate, and manganese sulfate were formulated into a 2 mol/L metal salt solution in a molar ratio of 8:1:1. The metal salt solution, 8 mol/L ammonia water, and a 5 mol/L NaOH solution were continuously added into a reaction kettle for reaction. By controlling the pH value to be 11.30, the ammonia concentration to be 4.0 g/L, the reaction time to be 20 h, and the stirring rate to be 300 r/min in the reaction process, and utilizing a hydroxide co-precipitation method, Ni_{0.8}Co_{0.1}Mn_{0.1}(OH)₂ was prepared with a particle size Dv50 of 10 µm;
The aforementioned Ni_{0.8}Co_{0.1}Mn_{0.1}(OH)₂ and Lithium hydroxide were put in a colter blender in a molar ratio of 1:1.05 and mixed uniformly, and then the mixed material was put into a kiln for sintering at a sintering temperature of 750°C for a sintering time of 15 h under a sintering atmosphere of oxygen. After cooling, LiNi_{0.8}Co_{0.1}Mn_{0.1}O₂ with a particle size Dv50 of 10 µm was obtained by mechanical disruption.

### Comparative Example 2

The Comparative Example was same as Example 1, except that:
Nickel sulfate, cobalt sulfate, and manganese sulfate were formulated into a 2 mol/L metal salt solution in a molar ratio of 8:1:1. The metal salt solution, 8 mol/L ammonia water, and a 5 mol/L NaOH solution were continuously added into a reaction kettle for reaction. By controlling the pH value to be 11.60, the ammonia concentration to be 3.0 g/L, the reaction time to be 20 h, and the stirring rate to be 400 r/min in the reaction process, and utilizing a hydroxide co-precipitation method, Ni_{0.8}Co_{0.1}Mn_{0.1}(OH)₂ was prepared with a particle size Dv50 of 4 µm.

The aforementioned Ni_{0.8}Co_{0.1}Mn_{0.1}(OH)₂ and Lithium hydroxide were put in a colter blender in a molar ratio of 1:1.05 and mixed uniformly, and then the mixed material was put into a kiln for sintering at a sintering temperature of 800°C for a sintering time of 14 h under a sintering atmosphere of oxygen. After cooling, LiNi_{0.8}Co_{0.1}Mn_{0.1}O₂ with a particle size Dv50 of 4 µm was obtained by disrupting with an airflow pulverizer.

### Comparative Example 3

The Comparative Example was same as Example 1, except that:
The LiNi_{0.8}Co_{0.1}Mn_{0.1}O₂ (with a particle size Dv50of 10 µm) of the aforementioned Comparative Example 1 and LiNi_{0.8}Co_{0.1}Mn_{0.1}O₂ (with a particle size of Dv50 of 4 µm) of the Comparative Example 2 were put into a mixer at a mass ratio of 8:2 and mixed for a time of 1 h to obtain the positive electrode active material.

### II. Testing of relevant parameters

### (1) testing of compaction density

The compaction density of the positive electrode active material under a pressure of 5T was determined according to GB/T 24533-2009. A certain amount of powder of the positive electrode active material was taken and placed in a special compaction mold, and then the mold was placed on a compaction density instrument. A pressure of 5T was applied, the thickness of the powder under the pressure of 5T (thickness after pressure relief) was read on the device, and the compaction density was calculated by ρ = m/v.

The testing results were as shown in Table 1.

### (2) particle dispersity testing-particle size testing

The particle size of the positive electrode active material was determined according to GB/T 19077.1-2016/ISO 13320:2009 (particle size distribution laser diffraction method). A clean beaker was taken, added with an appropriate amount of the aforementioned positive electrode active material and an appropriate amount of pure water, and subjected to ultrasonication at 120 W/5 min to ensure that the material powder was completely dispersed in the water. The solution was poured into an injection tower of a laser particle size analyzer (Malvern Company, model: Mastersizer3000). Then as the solution was circulated to a test optical path system, scattered light emitted by particles under the irradiation of a laser beam was received, and the energy distribution thereof was measured, so a particle size distribution feature of the particles could be obtained (shading degree: 8-12%), and the corresponding numerical values of Dv10, Dv50 and Dv90 were read.

The particle dispersity was calculated according to the formula S = (Dv90 - Dv10)/Dv50. The results were as shown in Table 1.

### (3) testing of specific surface area

The testing of the specific surface area referred to GB/T 19587-2017, and conducted through a Tri-Star 3020-type specific surface area pore size analyzer available from Micromeritics, the United States, by a nitrogen adsorption specific surface area analysis test method, and the specific surface area of the material was calculated by a BET (Brunauer Emmett Teller) method.

The results were as shown in Table 1.

### III. Morphology Characterization of Sample

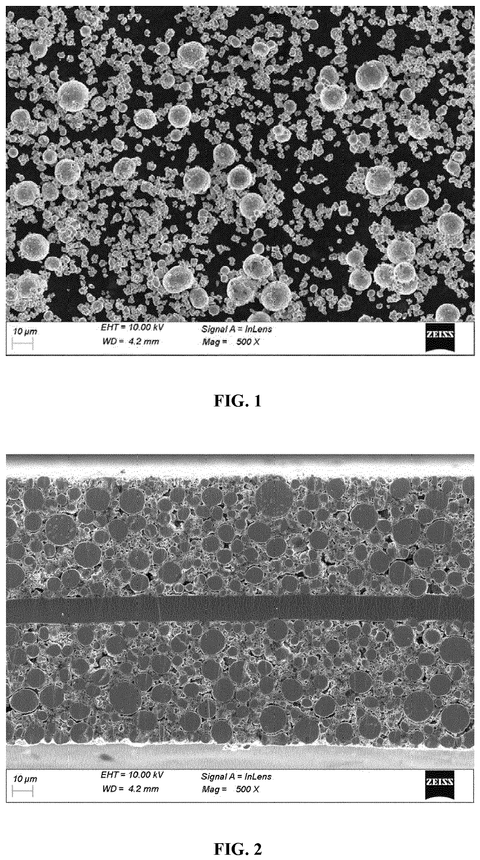

A field emission scanning electron microscope (Sigma300) of ZEISS company, German was employed to characterize (1) the surface morphology of the positive electrode active material of Example 1, wherein the results were as shown in Fig. 1; and (2) the morphology of the section of the sheet made from the positive electrode active material of Example1, wherein the results were as shown in Fig. 2.

### IV. Performance Test of Secondary Battery

### (1) testing of initial gram capacity and first effect of button-type battery

At 2.8-4.3 V, a button-type battery was charged to 4.3 V according to 0.1 C, and then charged at a constant voltage of 4.3 V until the current ≤ 0.05 mA, and allowed to stand for 2 min. The charging capacity at this time was recorded as C0, and then the battery was discharged to 2.8 V according to 0.1 C, and the discharging capacity at this time was the initial gram capacity, which was recorded as D0.

The first effect was calculated according to D0/C0*100%.

The results were as shown in Table 2.

### (2) testing of initial gram capacity of total battery

In a constant-temperature environment of 25°C, the battery was allowed to stand for 5min, discharged to 2.8 V according to 1/3C, allowed to stand for 5 min, charged to 4.25 V according to 1/3C, then charged at a constant voltage of 4.25 V until the current ≤ 0.05 C, and allowed to stand for 5 min. Then the battery was discharged to 2.8 V according to 1/3C, and the discharging capacity at this time was the initial gram capacity, which was recorded as D0.

The results were as shown in Table 2.

### (3) capacity retention rate of total battery at 25°C

At 25°C, the battery was charged to 4.25 V at a constant current of 1 C, then charged at a constant voltage of 4.25 V until the current dropped to 0.05 C, and then discharged to 2.8 V at a constant current of 1 C to obtain the first-cycle discharge specific capacity (C_{d1}). Charging and discharging were repeated as such until the 300th cycle, so as to obtain the discharge specific capacity of the lithium-ion battery after n cycles, which was recorded as C_{dn}. Capacity retention rate = discharge specific capacity after n cycles (C_{dn})/first-cycle discharge specific capacity (C_{d1}).

The results were as shown in Table 2.

### (4) capacity retention rate of total battery at 45°C

At 45°C, the battery was charged to 4.25 V at a constant current of 1 C, then charged at a constant voltage of 4.25 V until the current dropped to 0.05 C, and then discharged to 2.8 V at a constant current of 1 C to obtain the first-cycle discharge specific capacity (C_{d1}). Charging and discharging were repeated as such until the 300th cycle, so as to obtain the discharge specific capacity of the lithium-ion battery after n cycles, which was recorded as C_{dn}. Capacity retention rate = discharge specific capacity after n cycles (C_{dn})/first-cycle discharge specific capacity (C_{d1}).

The results were as shown in Table 2.

### (5) testing of gas expansion in total battery at 70°C

A total battery was stored at a 100% state of charge (SOC) at 70°C. The open circuit voltage (OCV) and AC internal resistance (IMP) of the battery cells were measured before, after and during storage to monitor SOC, and the volumes of the battery cells were measured. The total battery was taken out after every 48 hours of storage, the OCV and IMP were tested after standing for 1 h, and the volume of the battery cell was measured by a drainage method after it was cooled to room temperature. The drainage method is to first measure the gravity F 1 of the battery cell with a balance that automatically performs unit conversion on the dial data separately, and then the battery cell was placed completely in deionized water (the density was known to be 1 g/cm3) to measure the gravity F2 of the battery cell at this time, and the buoyancy force F subjected by the battery cell was F1-F2, and then calculate the volume of the battery cell V = (F1-F2)/ρg according to Archimedes' principle Ffloat = ρgV_displaced.

Each time after the volume was tested, the battery cell was recharged by charging it at a constant current of 1 C to 4.25 V, and then charging it at a constant voltage of 4.25 V until the current dropped to 0.05 C. After the recharge was completed, it was put into the furnace to continue testing.

After 30 days of storage, the volume of the battery cell was measured, and the increase amount in the volume of the battery cell after storage relative to that before storage was calculated as the gas production amount.

The results were as shown in Table 2.

**Table 1 Composition of positive electrode active material and related parameters of Examples 1-23and Comparative Examples 1-3**

| Example No. | First positive electrode active material A | | Second positive electrode active material B | | Mass ratio A:B of mixin g | Specifi c surface area (m²/g) | Compactio n density PD under 5T (g/cm³) | Particle dispersit y S | PD × S |
|---|---|---|---|---|---|---|---|---|---|
| | chemical formula I | Particl e size Dv50 (µm) | chemical formula 11 | Particl e size Dv50 (µm) | | | | | |
| 1 | Li_{1.03}Na_{0.02}(Ni_{0.8}Co_{0.1}Mn_{0.1})_{0.99}Al_{0.01}O₂ | 10 | Li_{1.03}Na_{0.02}(Ni_{0.8}Co_{0.1}Mn_{0.1})_{0.99}Al_{0.01}O₂ | 4 | 8:2 | 0.48 | 3.898 | 1.844 | 7.188 |
| 2 | Li_{1.03}Na_{0.02}(Ni_{0.8}Co_{0.1}Mn_{0.1})_{0.99}Al_{0.01}O₂ | 6 | Li_{1.03}Na_{0.02}(Ni_{0.8}Co_{0.1}Mn_{0.1})_{0.99}Al_{0.01}O₂ | 4 | 8:2 | 0.66 | 3.713 | 1.839 | 6.828 |
| 3 | Li_{1.03}Na_{0.02}(Ni_{0.8}Co_{0.1}Mn_{0.1})_{0.99}Al_{0.01}O₂ | 8 | Li_{1.03}Na_{0.02}(Ni_{0.8}Co_{0.1}Mn_{0.1})_{0.99}Al_{0.01}O₂ | 4 | 8:2 | 0.61 | 3.855 | 1.87 | 7.209 |
| 4 | Li_{1.03}Na_{0.02}(Ni_{0.8}Co_{0.1}Mn_{0.1})_{0.99}Al_{0.01}O₂ | 15 | Li_{1.03}Na_{0.02}(Ni_{0.8}Co_{0.1}Mn_{0.1})_{0.99}Al_{0.01}O₂ | 4 | 8:2 | 0.56 | 3.815 | 1.918 | 7.317 |
| 5 | Li_{1.03}Na_{0.02}(Ni_{0.8}Co_{0.1}Mn_{0.1})_{0.99}Al_{0.01}O₂ | 20 | Li_{1.03}Na_{0.02}(Ni_{0.8}Co_{0.1}Mn_{0.1})_{0.99}Al_{0.01}O₂ | 4 | 8:2 | 0.42 | 3.768 | 1.957 | 7.374 |
| 6 | Li_{1.03}Na_{0.02}(Ni_{0.8}Co_{0.1}Mn_{0.1})_{0.99}Al_{0.01}O₂ | 10 | Li_{1.03}Na_{0.02}(Ni_{0.8}Co_{0.1}Mn_{0.1})_{0.99}Al_{0.01}O₂ | 2 | 8:2 | 0.53 | 3.756 | 1.906 | 7.159 |
| 7 | Li_{1.03}Na_{0.02}(Ni_{0.8}Co_{0.1}Mn_{0.1})_{0.99}Al_{0.01}O₂ | 10 | Li_{1.03}Na_{0.02}(Ni_{0.8}Co_{0.1}Mn_{0.1})_{0.99}Al_{0.01}O₂ | 2.5 | 8:2 | 0.53 | 3.83 | 1.917 | 7.342 |
| 8 | Li_{1.03}Na_{0.02}(Ni_{0.8}Co_{0.1}Mn_{0.1})_{0.99}Al_{0.01}O₂ | 10 | Li_{1.03}Na_{0.02}(Ni_{0.8}Co_{0.1}Mn_{0.1})_{0.99}Al_{0.01}O₂ | 5 | 8:2 | 0.49 | 3.762 | 1.856 | 6.982 |
| 9 | Li_{1.03}Na_{0.02}(Ni_{0.8}Co_{0.1}Mn_{0.1})_{0.99}Al_{0.01}O₂ | 10 | Li_{1.03}Na_{0.02}(Ni_{0.8}Co_{0.1}Mn_{0.1})_{0.99}Al_{0.01}O₂ | 4 | 5:5 | 0.67 | 3.776 | 1.812 | 6.842 |
| 10 | Li_{1.03}Na_{0.02}(Ni_{0.8}Co_{0.1}Mn_{0.1})_{0.99}Al_{0.01}O₂ | 10 | Li_{1.03}Na_{0.02}(Ni_{0.8}Co_{0.1}Mn_{0.1})_{0.99}Al_{0.01}O₂ | 4 | 6:4 | 0.63 | 3.806 | 1.881 | 7.159 |
| 11 | Li_{1.03}Na_{0.02}(Ni_{0.8}Co_{0.1}Mn_{0.1})_{0.99}Al_{0.01}O₂ | 10 | Li_{1.03}Na_{0.02}(Ni_{0.8}Co_{0.1}Mn_{0.1})_{0.99}Al_{0.01}O₂ | 4 | 7:3 | 0.58 | 3.971 | 1.921 | 7.628 |
| 12 | Li_{1.03}Na_{0.02}(Ni_{0.8}Co_{0.1}Mn_{0.1})_{0.99}Al_{0.01}O₂ | 10 | Li_{1.03}Na_{0.02}(Ni_{0.8}Co_{0.1}Mn_{0.1})_{0.99}Al_{0.01}O₂ | 4 | 9:1 | 0.45 | 3.841 | 1.864 | 7.160 |
| 13 | Li_{1.03}Na_{0.02}(Ni_{0.9}Co_{0.05}Mn_{0.05})_{0.99}Al_{0.01}O₂ | 10 | Li_{1.03}Na_{0.02}(Ni_{0.9}Co_{0.05}Mn_{0.05})_{0.99}Al_{0.01}O₂ | 4 | 8:2 | 0.45 | 3.873 | 1.873 | 7.254 |
| 14 | Li_{1.03}Na_{0.02}(Ni_{0.96}Co_{0.03}Mn_{0.01})_{0.99}Al_{0.01}O₂ | 10 | Li_{1.03}Na_{0.02}(Ni_{0.7}Co_{0.1}Mn_{0.2})_{0.99}Al_{0.01}O₂ | 4 | 8:2 | 0.51 | 3.849 | 1.896 | 7.298 |
| 15 | Li_{1.03}Na_{0.02}(Ni_{0.7}Co_{0.2}Mn₀₁)_{0.99}Al_{0.01}O₂ | 10 | Li_{1.03}Na_{0.02}(Ni_{0.96}Co_{0.03}Mn_{0.01})_{0.99}Al_{0.01}O₂ | 4 | 8:2 | 0.44 | 3.828 | 1.924 | 7.365 |
| 16 | Li_{1.03}Rb_{0.02}(Ni_{0.8}Co_{0.1}Mn_{0.1})_{0.99}Y_{0.01}O₂ | 10 | Li_{1.03}Rb_{0.02}(Ni_{0.8}Co_{0.1}Mn_{0.1})_{0.99}Y_{0.01}O₂ | 4 | 8:2 | 0.44 | 3.901 | 1.932 | 7.537 |
| 17 | LiK_{0.05}(Ni_{0.8}Co_{0.1}Mn_{0.1})_{0.97}Zr_{0.03}O₂ | 10 | LiK_{0.05}(Ni_{0.8}Co_{0.1}Mn_{0.1})_{0.97}Zr_{0.03}O₂ | 4 | 8:2 | 0.53 | 3.831 | 1.878 | 7.195 |
| 18 | Li_{0.95}K_{0.1}(Ni_{0.8}Co_{0.1}Mn_{0.1})_{0.98}W_{0.02}O₂ | 10 | Li_{0.95}K_{0.1}(Ni_{0.8}Co_{0.1}Mn_{0.1})_{0.98}W_{0.02}O₂ | 4 | 8:2 | 0.5 | 3.933 | 1.853 | 7.288 |
| 19 | Li_{1.04}Na_{0.01}(Ni_{0.9}Co_{0.05}Mn_{0.05})_{0.95}Sb_{0.05}O₂ | 10 | Li_{1.04}Na_{0.01}(Ni_{0.9}Co_{0.05}Mn_{0.05})_{0.95}Sb_{0.05}O₂ | 4 | 8:2 | 0.47 | 3.888 | 1.804 | 7.014 |
| 20 | Li_{1.03}Na_{0.02}(Ni_{0.9}Co_{0.05}Mn_{0.05})_{0.99}Nb_{0.01}O₂ | 10 | Li_{1.03}Na_{0.02}(Ni_{0.9}Co_{0.05}Mn_{0.05})_{0.99}Nb_{0.01}O₂ | 4 | 8:2 | 0.48 | 3.848 | 1.822 | 7.011 |
| 21 | Li_{1.03}K_{0.02}(Ni_{0.9}Co_{0.05}Mn_{0.05})_{0.99}Ti_{0.01}O₂ | 10 | Li_{1.03}K_{0.02}(Ni_{0.9}Co_{0.05}Mn_{0.05})_{0.99}Ti_{0.01}O₂ | 4 | 8:2 | 0.43 | 3.893 | 1.814 | 7.062 |
| 22 | Li_{1.03}K_{0.02}(Ni_{0.9}Co_{0.05}Mn_{0.05})_{0.99}Mo_{0.01}O₂ | 10 | Li_{1.03}K_{0.02}(Ni_{0.9}Co_{0.05}Mn_{0.05})_{0.99}Mo_{0.01}O₂ | 4 | 8:2 | 0.49 | 3.874 | 1.843 | 7.140 |
| 23 | Li_{1.03}Na_{0.02}(Ni_{0.9}Co_{0.05}Mn_{0.05})_{0.99}Al_{0.01}O_{1.97} F_{0.03} | 10 | Li_{1.03}Na_{0,02}(Ni_{0.9}Co_{0.05}Mn_{0.05})_{0.99}Al_{0.01}O_{1.97}F _{0.03} | 4 | 8:2 | 0.46 | 3.884 | 1.938 | 7.527 |
| Comparative Example 1 | LiNi_{0.8}Co_{0.1}Mn_{0.1}O₂ | 10 | / | / | / | 0.35 | 3.397 | 1.182 | 4.015 |
| Comparative Example 2 | / | / | LiNi_{0.8}Co_{0.1}Mn_{0.1}O₂ | 4 | / | 1.35 | 3.213 | 0.852 | 2.737 |
| Comparative Example 3 | LiNi_{0.8}Co_{0.1}Mn_{0.1}O₂ | 10 | LiNi_{0.8}Co_{0.1}Mn_{0.1}O₂ | 4 | 8:2 | 0.51 | 3.554 | 1.392 | 4.947 |

**Table 2 Performance test results of secondary batteries of Examples 1-23 and Comparative Examples 1-3**

| Example No. | Gram capacity of button-type battery at 0.1C (mAh/g) | First effect of button-type battery (%) | Gram capacity of total battery at 1/3C (mAh/g) | 300 cycles at 25°C (%) | 300 cycles at 45°C (%) | Gas production at 70°C for 30 days (mL/Ah) |
|---|---|---|---|---|---|---|
| 1 | 212 | 93.83 | 207 | 95.75 | 93.28 | 4.84 |
| 2 | 212 | 93.28 | 207 | 95.39 | 93.32 | 5.16 |
| 3 | 210 | 93.84 | 206 | 95.29 | 93.75 | 4.68 |
| 4 | 210 | 94.19 | 207 | 95.88 | 93.67 | 4.81 |
| 5 | 209 | 93.74 | 204 | 95.83 | 93.58 | 4.93 |
| 6 | 209 | 93.53 | 205 | 95.39 | 93.78 | 4.78 |
| 7 | 211 | 94.25 | 206 | 95.84 | 93.65 | 4.71 |
| 8 | 212 | 93.07 | 207 | 95.59 | 93.82 | 3.83 |
| 9 | 208 | 93.22 | 203 | 96.14 | 93.77 | 4.95 |
| 10 | 210 | 93.86 | 204 | 95.66 | 93.52 | 4.44 |
| 11 | 212 | 94.44 | 206 | 95.47 | 93.33 | 4.02 |
| 12 | 211 | 94.2 | 206 | 95.27 | 93.93 | 3.69 |
| 13 | 222 | 94.05 | 214 | 95.14 | 93.54 | 5.85 |
| 14 | 235 | 94.72 | 220 | 94.17 | 93.06 | 6.26 |
| 15 | 206 | 94.92 | 203 | 96.33 | 93.67 | 4.79 |
| 16 | 213 | 94.64 | 207 | 96.07 | 93.75 | 4.69 |
| 17 | 211 | 93.33 | 206 | 95.68 | 93.55 | 3.31 |
| 18 | 212 | 93.96 | 206 | 96.44 | 94.38 | 3.8 |
| 19 | 225 | 94.63 | 216 | 95.48 | 93.81 | 4.29 |
| 20 | 222 | 93.39 | 213 | 95.29 | 93.37 | 4.77 |
| 21 | 224 | 93.78 | 215 | 95.11 | 93.49 | 4.14 |
| 22 | 224 | 93.59 | 214 | 95.72 | 93.44 | 3.86 |
| 23 | 220 | 92.84 | 213 | 95.36 | 93.71 | 3.26 |
| Comparative Example 1 | 207 | 92.33 | 200 | 94.26 | 92.3 | 7.84 |
| Comparative Example 2 | 204 | 90.98 | 196 | 92.05 | 90.19 | 9.26 |
| Comparative Example 3 | 206 | 91.71 | 199 | 93.28 | 91.58 | 8.06 |

Fig. 1 showed a scanning electron micrograph of the positive electrode active material of Example 1. As could be seen from the figure, both the first positive electrode active material A with the larger particle size and the second positive electrode active material B with the smaller particle size were uniformly dispersed and present as a relatively regular spherical shape. Fig. 2 showed a scanning electron micrograph of a section of a sheet made from the positive electrode active material of Example 1. As could be seen from the figure, the positive electrode active material of the present application had a high filling degree among particles, reduced particle breakage, and good dispersibility, and the compaction density of the sheet was high.

As could be seen from Table 1 and Table 2, compared with the positive electrode active material of Comparative Examples 1-3, the positive electrode active material of the present application had high compaction density, good dispersibility, and small specific surface area, and a battery prepared therefrom had high energy density, improved cycling performance, reduced gas production phenomena, and improved safety performance of the battery.

It should be noted that the present application is not limited to the aforementioned embodiments. The aforementioned embodiments are only examples, and the embodiments that have substantially the same composition as the technical idea and exert the same effects within the scope of the technical solution of the present application are all included in the technical scope of the present application. Furthermore, without departing from the scope of the subject matter of the present application, various modifications that can come into the mind of those skilled in the art applied to the embodiments and other embodiments constructed by combining partial composition elements of the embodiments are also included in the scope of the present application.

## Claims

1. A positive electrode active material comprising: a first positive electrode active material A and a second positive electrode active material B, wherein,
the first positive electrode active material A is a polycrystalline material, and has a chemical formula of (I): Li_{1.05-a1}Mₐ₁(Ni_{b1}Co_{c1}Mn_{d1})₁₋ₑ₁Qₑ₁O_{2-f1}H_{f1}, wherein in the formula (I), 0.01 ≤ a1 ≤ 0.1, 0.7 ≤ b1 ≤0.96, 0.03 ≤ c1 ≤ 0.2, 0.01 ≤ d1 ≤ 0.2, 0 < e1 ≤ 0.05, 0 ≤ f1 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the second positive electrode active material B is a monocrystalline material, and has a chemical formula of (II): Li_{1.05-a2}Mₐ₂(Ni_{b2}Co_{c2}Mn_{d2})₁₋ₑ₂Qₑ₂O_{2-f2}H_{f2}, wherein in the formula (II), 0.01 ≤ a2 ≤ 0.1, 0.7 ≤ b2 ≤ 0.96, 0.03 ≤ c2 ≤ 0.2, 0.01 ≤ d2 ≤ 0.2, 0 < e2 ≤ 0.05, 0 ≤ f2 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the particle dispersity S of the positive electrode active material and the compaction density PD of the positive electrode active material under a pressure of 5T satisfy: 5.5 ≤ S × PD ≤ 10.

2. The positive electrode active material according to claim 1, wherein the positive electrode active material satisfies: 6.4 ≤ S × PD ≤ 8.0.

3. The positive electrode active material according to claim 1 or 2, wherein the positive electrode active material has particle dispersity S of 1.5-2.5, and optionally 1.75-2.0.

4. The positive electrode active material according to claim 1 or 2, wherein the compaction density PD of the positive electrode active material under a pressure of 5T is 3.4-4.0 g/cm³, and optionally3.7-3.9 g/cm³.

5. The positive electrode active material according to claim 1 or 2, wherein a mass ratio of the first positive electrode active material A to the second positive electrode active material B is 9:1-1:1, and optionally 8:2-6:4.

6. The positive electrode active material according to claim 1 or 2, wherein the first positive electrode active material A has a Dv50 of 6-20 µm, and optionally 8-15 µm.

7. The positive electrode active material according to claim 1 or 2, wherein the second positive electrode active material B has a Dv50 of 2-5 µm, and optionally 2.5-4 µm.

8. The positive electrode active material according to claim 1 or 2 wherein the positive electrode active material has a specific surface area of 0.2-1.2 m²/g, and optionally 0.4-0.7 m²/g.

9. A method for preparing a positive electrode active material, comprising the following steps:
S1) preparation of a first positive electrode active material A: mixing a lithium salt, a precursor of the first positive electrode active material A, a compound containing an M element, a compound containing a Q element and a compound containing an H element according to a molar ratio, and sintering;
S2) preparation of a second positive electrode active material B: mixing a lithium salt, a precursor of the second positive electrode active material B, a compound containing an M element, a compound containing a Q element and a compound containing an H element according to a molar ratio, and sintering; and
S3) mixing the first positive electrode active material A with the second positive electrode active material B to make the positive electrode active material;
wherein, the first positive electrode active material A is a polycrystalline material, and has a chemical formula of (I): Li_{1.05-a1}Mₐ₁(Ni_{b1}Co_{c1}Mn_{d1})₁₋ₑ₁Qₑ₁O_{2-f1}H_{f1}, wherein in the formula (I), 0.01 ≤ a1 ≤ 0.1, 0.7 ≤ b1 ≤ 0.96, 0.03 ≤ c1 ≤ 0.2, 0.01 ≤ d1 ≤ 0.2, 0 < e1 ≤ 0.05, 0 ≤ f1 ≤ 0.1, M is one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the second positive electrode active material B is a monocrystalline material, and has a chemical formula of (II): Li_{1.05-a2}Mₐ₂(Ni_{b2}Co_{c2}Mn_{d2})₁₋ₑ₂Qₑ₂O_{2-f2}H_{f2}, wherein in the formula (II), 0.01 ≤ a2 ≤ 0.1, 0.7 ≤ b2 ≤ 0.96, 0.03 ≤ c2 ≤ 0.2, 0.01 ≤ d2 ≤ 0.2, 0 < e2 ≤ 0.05, 0 ≤ f2 ≤ 0.1, Mis one or more elements selected from Na, K, Rb and Cs, Q is one or more elements selected from Al, Mg, Zr, Ti, W, Y, B, Co, Nb, Mo, Sb and Sr, H is one or more elements selected from F, Cl, Br and I,
the particle dispersity S of the positive electrode active material and the compaction density PD of the positive electrode active material under a pressure of 5T satisfy: 5.5 ≤ S × PD ≤ 10.

10. The method for preparing a positive electrode active material according to claim 9, wherein the precursor of the first positive electrode active material A has a Dv50 of 6-20 µm, and optionally 8-15 µm; and the precursor of the second positive electrode active material B has a Dv50 of 2-5 µm, and optionally 2.5-4 µm.

11. The method for preparing a positive electrode active material according to claim 9, wherein the compound containing the M element is one or more of a carbonate, oxide or sulfate containing the M element, and the M element is one of Na, K, Rb or Cs; the compound containing the Q element is one or more of an oxide, hydroxide or carbonate containing the Q element, and the Q element is one of Al, Mg, Zr, Ti, W, Y, B, Co, Nb, Mo, Sb or Sr; and the compound containing the H element is one or more of a metal compound and non-metal compound containing the H element, and the H element is one of F, Cl, Br or I.

12. The method for preparing a positive electrode active material according to any one of claims 9-11, wherein in the step S1), a temperature of the sintering is 500-800°C and a time of the sintering is 5-20 h.

13. The method for preparing a positive electrode active material according to any one of claims 9-11, wherein in the step S2), a temperature of the sintering is 600-900°C and a time of the sintering is 5-20 h.

14. The method for preparing a positive electrode active material according to any one of claims 9-11, wherein in the step S3), the first positive electrode active material A and the second positive electrode active material B are mixed at a mass ratio of 9:1-1:1, and optionally 4:1-3:2.

15. A secondary battery comprising the positive electrode active material according to any one of claims 1-8 or a positive electrode active material prepared by the preparation method according to any one of claims 9-14.

16. A battery module comprising the secondary battery according to claim 15.

17. A battery pack comprising the battery module according to claim 16.

18. An electrical device comprising at least one selected from the secondary battery according to claim 15, the battery module according to claim 16 or the battery pack according to claim 17.
